# EUROPEAN PATENT APPLICATION

(11) **EP 4 686 615 A1**
(43) Date of publication of application: **04.02.2026**
(21) Application number: 24192191.5
(22) Date of filing: 31.07.2024
(51) Int. Cl.: B60R 11/00

(54) **ATTACHING ARRANGEMENT FOR REMOVABLE VEHICLE ACCESSORIES AND VEHICLE TRIM COMPRISING SAID ATTACHING ARRANGEMENT**

(71) Applicant: Grupo Antolin-Ingenieria, S.A., 09007 Burgos (ES)
(72) Inventor: SANZ LÁZARO, Álvaro, 09007 Burgos (ES); PLÁGARO IZAGUIRRE, Aitor, 09007 Burgos (ES); ANTOLÍN FERNÁNDEZ, Adelaida, 09007 Burgos (ES)
(74) Representative: Capitán García, Maria Nuria

(57) **Abstract**

Attaching arrangement for removable vehicle accessories and vehicle trim comprising said attaching arrangement. The attaching arrangement comprises a fixed attaching assembly configured to be permanently connected to a vehicle trim and a removable attaching assembly which bears a vehicle accessory configured to be removable connected to the fixed attaching assembly. Particularly, the attaching arrangement combines two types of retention to produce the overall holding force of the attaching arrangement, namely a magnetic retention in the assembly direction and a mechanical retention in a plane perpendicular to the assembly direction.

## Description

### TECHNICAL FIELD OF THE INVENTION

The present invention relates to an attaching arrangement for removable vehicle accessories. Particularly, the attaching arrangement comprises a fixed attaching assembly configured to be permanently connected to a vehicle trim and a removable attaching assembly configured to be removable connected to the fixed attaching assembly.

Additionally, the invention relates to a vehicle trim comprising said attaching arrangement.

### BACKGROUND OF THE INVENTION

It is very common to find different types of accessories in the vehicle interior such as cup holders, phone holders, lamps, speakers, etc. in order to improve the vehicle occupant comfort.

These accessories are typically arranged in positions easily accessible to the occupants such as the door panel, the headliner, the pillar trim, center console or the instrument panel for example. Therefore, said accessories are usually connected to the vehicle trims.

To provide the connection between both components it can be used permanent attachment means such as screws, rivets or an integrated design, that is they are built-in during the vehicle trim manufacturing; or it can be used non-permanent attachments such as suction cups, magnetic attachments or hook-and-loop attachments.

Permanent attachment means are advantageous because they provide a secure and stable attachment, and in case of integrated design they further provide a seamlessly finishing into the vehicle's design.

However, this type of attachment also has limitations because normally the accessory cannot be removed or adjusted for being adapted to the occupant's needs at any given time.

Thus, they do not allow customizing the space according to personal preferences and necessities of the occupant, being in this way its functionality limited to the area where the accessories are attached.

In order to overcome the above limitations non-permanent attachments can be provided instead of said permanent attachments.

One of the most commonly used due to its ease of use, versatility, durability, aesthetic appearance and silent operation is the magnetic attachment. Some examples are EP0845392, WO2005/056340 and JP2013244902.

This type of non-permanent attachment offers a high degree of flexibility since the accessory can be easily removed as needed and used freely both inside and outside the vehicle interior provided that there is a magnetic surface, in order to satisfy the necessities of the occupants. Additionally, it can also be easily installed without tools or professional help.

However, this type of attachment is less stable compared to permanent attachments due to the fact that magnetic retention can be lost in case of external forces occur, particularly in case said external forces are in the retention direction, for example in case of crash or accident. Therefore, magnetic attachments can compromise the safety of the occupants.

In view of the disadvantages mentioned above, the object of the invention is an attaching arrangement for removable vehicle accessories which allows freely use of the accessory either inside or outside vehicle interior, it can be easily installed and at the same time it provides a strong attachment taking into account the external forces the attaching arrangement can be subjected to.

### DESCRIPTION OF THE INVENTION

The present invention is defined and characterised by the independent claims, while the dependent claims describe additional features thereof.

Due to the fact that the attaching arrangement comprises a first retention unit collaborating with a counter first retention unit to provide magnetic retention in the assembly direction of the attaching arrangement, the vehicle accessory can be easily mounted and removed.

This allows adaptability and multi-purpose use because the vehicle accessory can be used in various positions and settings, providing flexibility for different situations and needs and additionally according to personal preferences.

This also allows the portability of the vehicle accessory allowing the vehicle occupant to move and use it wherever needed, both inside and outside the vehicle.

Thus, by using the same vehicle accessory for multiple purposes, the number of items needed is reduced.

Due to the fact that the attaching arrangement comprises a second retention unit collaborating with a counter second retention unit to provide mechanical retention according to a plane perpendicular to the assembly direction, the attaching arrangement provides additional security, particularly in the direction where the magnet's hold is weakest, enhancing in this way the overall holding force.

Thus, the attaching arrangement of the present invention provides a strong and more secure attachment taking into account the external forces the attaching arrangement can be subjected to being in the direction of the magnetic retention.

Particularly, the counter second retention unit comprises retractable magnets which protrude regarding the removable attaching assembly in order to provide said mechanical retention.

The movement of the retractable magnets to reach said protruding position is due to the repulsion force exerted by the second magnet when the attaching arrangement goes towards the fixed attaching assembly, that is when the vehicle occupant approaches the removable attaching assembly to the fixed attaching assembly to reach the assembly position.

During this approaching movement and particularly, when the first attaching assembly and the second removable attaching assembly come into contact, the elastic means force keeping the counter second retention unit distant from the counter first retention unit is overcome due to the pressure exerted by the fixed attaching assembly against the removable attaching assembly.

In this way, the second magnet and the retractable magnets are arranged in the same plane in order the repulsion force between them can act and allow the retractable magnets to move towards the outside of the guiding channels reaching the projected position in order to provide the mechanical retention by the mechanical interference produced between said retractable magnets and the groove provided in the second retention unit.

Therefore, the mechanical retention is provided automatically requiring minimal manual intervention by the vehicle occupant. This allows simplifying the use of the attaching arrangement, and consequently facilitating the disposition and the use of the corresponding vehicle accessory forming the attaching arrangement.

Additionally, this type of mechanical retention formed by retractable magnets is versatile and flexible due to the adaptability of the magnets to different sizes, shapes, and configurations, offering versatility in design and due to they provide a non-invasive position before they reach the assembly position unlike mechanical clamps or fasteners which might be invasive.

Optionally, the attaching arrangement of the present invention can further comprise a charging station which provides electrical power for charging a battery provided inside the removable attaching assembly. Thus, when the vehicle accessory rests in the assembly position it can also be electrically charged.

It allows powering the accessory in case it requires electrical power for its operation and its further use outside the assembly position.

### DESCRIPTION OF THE DRAWINGS

The present specification is complemented by a set of figures that illustrate a preferred embodiment, in no way limiting the invention.
Figure 1 shows an exploded view of the attaching arrangement and a vehicle door panel.
Figure 2 shows a perspective view of the attaching arrangement according to the assembly position on a vehicle door panel.
Figure 3 shows an exploded view of the attaching arrangement according to a first embodiment wherein the different elements thereof can be appreciated.
Figure 4 shows an exploded view of the attaching arrangement according to a second embodiment wherein it further comprises a charging station.
Figure 5 shows a cross-sectional view of the attaching arrangement according to the removed position.
Figure 6 shows a cross-sectional view of the attaching arrangement according to the assembly position.

### DETAILED DESCRIPTION OF THE INVENTION

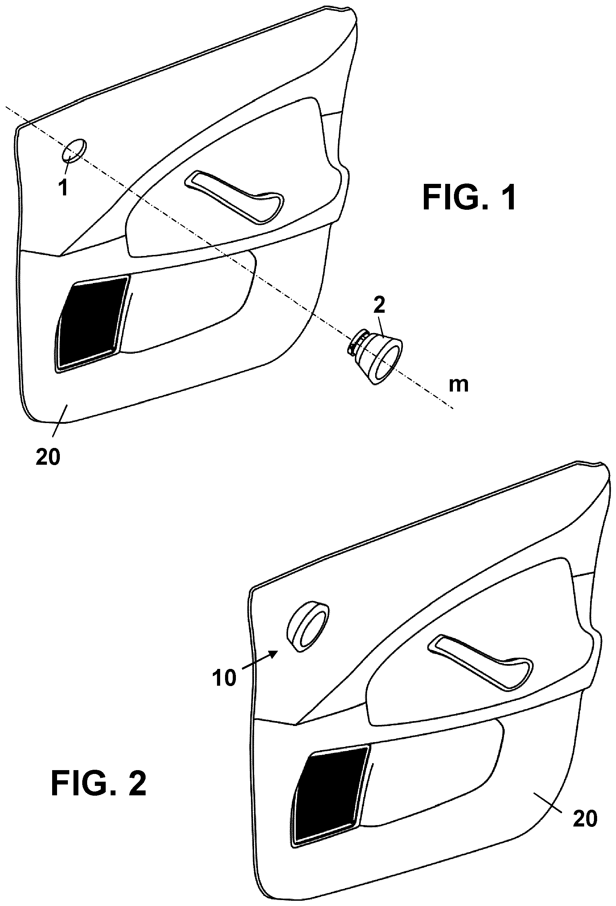

Figures 1 and 2 show an example in which the attaching arrangement (10) for removable vehicle accessories of the present invention is installed in a door panel (20).

Particularly, figure 1 shows the attaching arrangement (10) according to a removed position and figure 2 shows the attaching arrangement (10) according to an assembly position.

The invention considers other vehicle trims (20) not represented such as a headliner, an instrument panel; a pillar trim; any vehicle console such as the floor console, the center console or the overhead console; a luggage trim, etc. where the attaching arrangement (10) can be installed.

Particularly, the vehicle trim (20) comprises an opening (20.1) wherein the attaching arrangement (10) is installed.

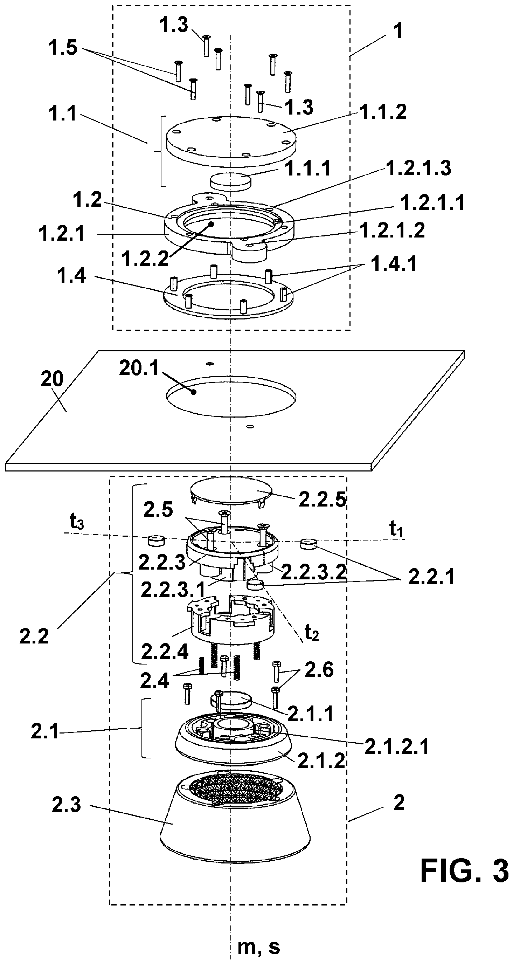

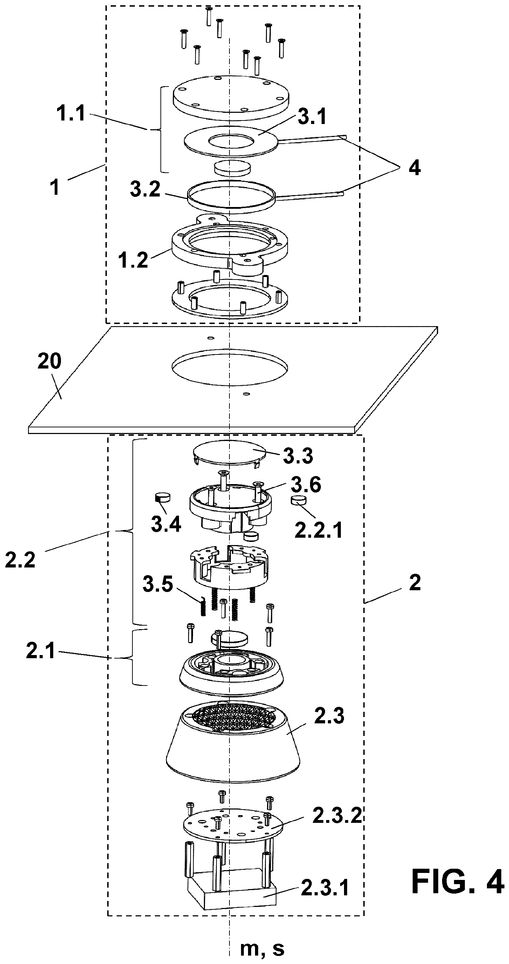

As figures 3 and 4 show, the attaching arrangement (10) for removable vehicle accessories comprises mainly two components, namely a fixed attaching assembly (1) configured to be permanently connected to the corresponding vehicle trim (20) and a removable attaching assembly (2) which bears a vehicle accessory (2.3) and which is configured to be removable connected to the fixed attaching assembly (1) according to an assembly direction "m".

The assembly direction "m", as figures 1 and 3 show, is essentially perpendicular to the main surface of the fixed attaching assembly (1) and coincides with the direction of the main axle "s" of the removable attaching assembly. Here "direction" means an axis or main line that is the orientation without any particular sense, that is a mere line without any arrow.

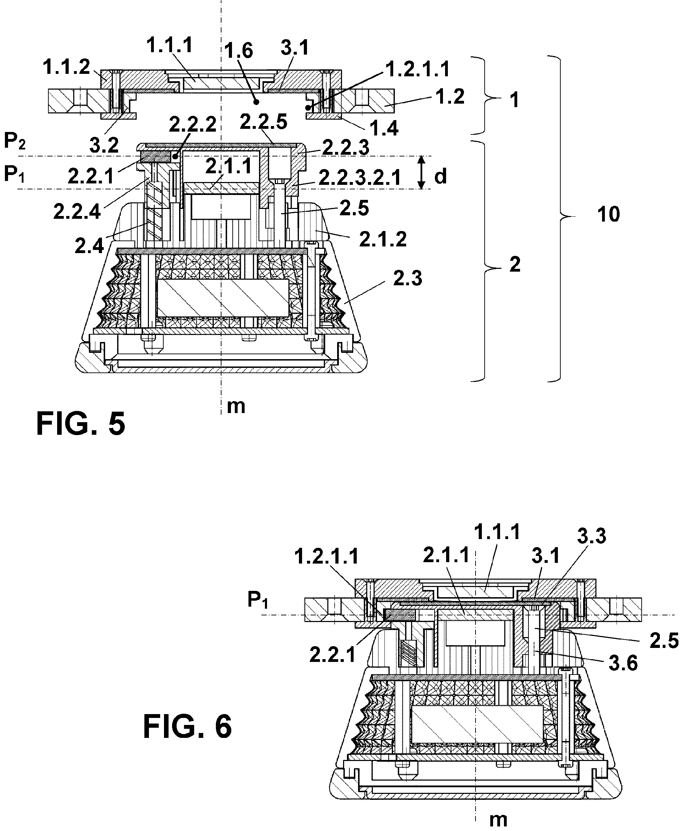

Therefore, the attaching arrangement (10) is configured to adopt a removed position in which the fixed attaching assembly (1) and the removable attaching assembly (2) are separated as figures 1 and 5 show, and an assembly position in which both (1, 2) are connected together as figures 2 and 6 show.

The removed position allows the portability of the vehicle accessory (2.3) allowing the vehicle occupant to move and use said vehicle accessory (2.3) wherever needed, both inside and outside the vehicle.

The assembly position allows the use of the vehicle accessory (2.3) at its fixed position on the vehicle trim (20), keep the vehicle accessory (2.3) in an orderly and controlled position and in case the attaching arrangement (10) comprises a charging station as disclosed below, it allows to charge a battery (2.3.1) of the vehicle accessory (2.3).

Figure 3 shows a first embodiment of the attaching arrangement in which the vehicle accessory (2.3) does not need electrical power.

The fixed attaching assembly (1) comprises a first retention unit (1.1) configured to provide magnetic retention according to the assembly direction "m" and a second retention unit (1.2) configured to provide mechanical retention according to a plane perpendicular to the assembly direction "m".

The collaboration between the first retention unit (1.1) and the second retention unit (1.2) forms a housing (1.6) configured to receive the removable attaching assembly (2) and wherein a part thereof is seated in the assembly position. For example, the first retention unit (1.1) can configure the base of the housing (1.6) and the second retention unit (1.2) can configure the walls.

The first retention unit (1.1) comprises a first magnet (1.1.1) which can be supported by a first magnet supporting unit (1.1.2).

The first magnet supporting unit (1.1.2) can be a plastic part comprising a housing where the first magnet (1.1.1) is attached by fitting or by gluing for example.

The collaboration between said first magnet (1.1.1) and a second magnet (2.1.1) arranged in the removable attaching assembly (2) and disclosed in detail below, provides the magnetic retention in the assembly direction "m".

The second retention unit (1.2) comprises an inner groove (1.2.1.1) which extends inwards the second retention unit (1.2) in a plane perpendicular to the assembly direction "m" creating thereby a channel in said second retention unit (1.2) as figure 5 shows. The groove (1.2.1.1) is configured to house a portion of retractable magnets (2.2.1) arranged in the removable attaching assembly (2) and disclosed in detail below as figure 6 shows.

According to the example represented in the figures, the second retention unit (1.2) comprises a frame (1.2.1) having a side wall essentially parallel to the assembly direction "m" which defines a main opening (1.2.2) through which the removable attaching assembly (2) accesses to reach the fixing attaching assembly (1) during the assembly process. The inner groove (1.2.1.1) is configured in the side wall of the frame (1.2.1). The frame (1.2.1) preferably is a plastic part.

The collaboration between the groove (1.2.1.1) and said retractable magnets (2.2.1) produces a mechanical interference to provide the mechanical retention in a plane perpendicular to the assembly direction "m" as figure 6 shows.

Additionally, the fixed attaching assembly (1) comprises first fixing means (1.3) configured to connect it to the vehicle trim (20).

Said first attaching means (1.3) can be screws or clips for example. Particularly, in the example represented in the figures, the first attaching means (1.3) comprise screws connected to the vehicle trim (20) through openings (1.2.1.2) provided in tabs forming part of the frame (1.2.1) of the second retention unit (1.2).

The fixed attaching assembly (1) can be connected for example to the non-view side of the vehicle trim (20) according to the assembly position of the vehicle trim (20) inside the vehicle.

Additionally, the fixed attaching assembly (1) can further comprise fourth attaching means (1.5) to connect the first retention unit (1.1) and the second retention unit (1.2) in case they are provided as independent units. Said fourth attaching means (1.5) can be screws or clips for example.

Additionally, and according to the example represented in figures 3 or 4, the fixed attaching assembly (1) can also comprise a decorative cover (1.4) to improve its appearance in the removed position.

Additionally, said decorative cover (1.4) can act as connecting element to attach together all the components forming the fixed attaching assembly (1) in such a way that the second retention unit (1.2) is arranged between the decorative cover (1.4) and the first retention unit (1.1).

The decorative cover (1.4) can comprise several projections (1.4.1) extended in the assembly direction "m" which are distributed along the length thereof where fourth fixing means (1.5) are introduced to attach together all the components.

Additionally, the decorative cover (1.4) as figure 5 shows, can collaborate with the second retention unit (1.2), and more particularly with the groove (1.2.1.1) to complete the channel where the retractable magnets (2.2.1) are housed in the assembly position. However, this channel can be completely configured in the second retention unit (1.2) without the need to arrange the decorative cover (1.4) to complete said channel.

The second component forming the attaching arrangement (10) of the present invention is the removable attaching assembly (2).

It particularly comprises a counter first retention unit (2.1) and a counter second retention unit (2.2) being one (2.1, 2.2) inside the other (2.1, 2.2), at least partially; elastic means (2.4) provided between said counter first retention unit (2.1) and said counter second retention unit (2.2); second fixing means (2.5) to attach together the counter first retention unit (2.1) and the counter second retention unit (2.2); a vehicle accessory (2.3); and third fixing means (2.6) to attach the vehicle accessory (2.3) to the removable attaching assembly (2).

Particularly, the counter first retention unit (2.1) is configured to collaborate with the first retention unit (1.1) to provide magnetic retention according to the assembly direction "m". For this, it comprises a second magnet (2.1.1).

Thus, the attraction force exerted between the first magnet (1.1.1) and second magnet (2.1.1) when they are close enough, provides said magnetic retention as figure 6 shows. Said magnets (1.1.1, 2.1.1) are strong enough to guarantee a strong magnetic force despite not being directly in contact, that is, despite being intermediate components between them.

As figure 3 shows, the second magnet (2.1.1) can be supported by a second magnet supporting unit (2.1.2).

The second magnet supporting unit (2.1.2) can be a plastic part comprising a central post (2.1.2.1) where the second magnet (1.1.1) is attached by fitting or by gluing for example. Additionally, the second magnet supporting unit (2.1.2) can comprise several internal posts surrounding the central post (2.1.2.1) to assist the guiding of the counter second retention unit (2.2) since one unit moves regarding the other as it is disclosed below, and to house both the elastic means (2.4) and the second fixing means (2.5).

Additionally, the second magnet supporting unit (2.1.2) acts as link between the vehicle accessory (2.3) and the rest of the components forming the removable attaching assembly (2). For that, third fixing means (2.6) comprising for example screws, rivets or clips are provided for connecting both components (2.1, 2.3).

Regarding the counter second retention unit (2.2), it is configured to collaborate with the second retention unit (1.2) to provide mechanical retention according to the plane perpendicular to the assembly direction "m".

Said counter second retention unit (2.2) mainly comprises guiding channels (2.2.2) having main axes "t₁", "t₂", "t₃" contained in a plane perpendicular to the assembly direction "m"; retractable magnets (2.2.1) housed in the guiding channels (2.2.2) and configured to move along them along the main axes "t₁", "t₂", "t₃" directions in such a way that they can adopt a retracted position when they (2.2.1) are totally inside the guiding channels (2.2.2) and a projected position when they (2.2.1) project outward from the counter second retention unit (2.2) but remain retained within the corresponding guiding channel (2.2.2); and a contact surface (2.2.5) configured to contact the fixed attaching assembly (1) in the assembly position.

According to a particular example of the invention represented in figure 3, the counter second retention unit (2.2) is divided into two parts, a main part (2.2.3) and a linking part (2.2.4) that are connected together by fixing means forming a single part. Preferably, both are plastic parts.

Particularly, the linking part (2.2.4) comprises a central opening where a portion of the main part (2.2.3) is housed in such a way that said portion of the main part (2.2.3) reaches the counter first retention unit (2.1).

Particularly, the main part (2.2.3) comprises a central post (2.2.3.1) configured to fit into the central post (2.1.2.1) of the second magnet supporting unit (2.1.2) as figure 5 shows.

Additionally, the main part (2.2.3) comprises hollow posts (2.2.3.2) surrounding the central post (2.2.3.1) to house the second fixing means (2.5). As figures 5 and 6 show, said hollow posts (2.2.3.2) further comprise a narrowing portion (2.2.3.2.1) in order to stop the second fixing means (2.5) during the guiding movement in the assembly direction "m" as to ensure that the units (2.1, 2.2) are permanently connected together.

On the other hand, the collaboration between the main part (2.2.3) and a linking part (2.2.4) allows configuring the guiding channels (2.2.2) which allows the movement of the retractable magnets along the respective main axes "t₁", "t₂", "t₃" directions and prevents the movement thereof along the assembly direction "m". Particularly, the linking part (2.2.4) forms the bottom part of the guiding channel (2.2.2) and the main part (2.2.3) forms the top part thereof as figure 5 shows.

Figures 3 and 4 show three retractable magnets (2.2.1) and three corresponding guiding channels (2.2.2) as example. However, the invention considers other options provided the number is greater than two.

Additionally, the removable attaching assembly (2) comprises elastic means (2.4) and second fixing means (2.5) between the counter first retention unit (2.1) and the counter second retention unit (2.2).

On one hand, the second fixing means (2.5) keep said units (2.1, 2.2) permanently connected together but allow a movement between them along the assembly direction "m" as figures 5 and 6 show. That is, one of said units (2.1, 2.2) can be displaced regarding the other (2.1, 2.2) along the assembly direction "m". According to the example represented in the figures, the counter second retention unit (2.2) moves regarding the counter first retention unit (2.1) which stays fixed.

On the other hand, the elastic means (2.4) allow keeping a stable position in which the counter first retention unit (2.1) is distant from the counter second retention unit (2.2) due to the elastic means (2.4) force.

Thus, the removable attaching assembly (2) is configured to adopt a first position where the counter first retention unit (2.1) is distant from the counter second retention unit (2.2) as figure 5 shows and a second position where the counter first retention unit (2.1) is close to the counter second retention unit (2.2) as figure 6 shows.

Particularly, when the attaching arrangement (10) is according to the removed position and there is no other force exerting pressure against the elastic means (2.4) force, said elastic means (2.4) allow the removable attaching assembly (2) to maintain the first position.

In the first position represented in figure 5, the second magnet (2.1.1) is arranged in a first plane P₁ perpendicular to the assembly direction "m"; the retractable magnets (2.2.1) are arranged in a second plane P₂ perpendicular to the assembly direction "m" in such a way that the first plane P₁ and the second plane P₂ are different and they are separated a distance "d". Therefore, the magnetic forces produced by the second magnet (2.1.1) are not influenced by the magnetic forces produced by the retractable magnets (2.2.1).

Additionally in the first position, the retractable magnets (2.2.1) are freely movable along the respective main axes "t₁", "t₂", "t₃" directions of the guiding channels (2.2.2) which allows they move towards the inside of the guiding channels (2.2.2) reaching a retracted position as figure 5 shows.

On the other hand, in the assembly position in which the removable attaching assembly (2) is connected to the fixed attaching assembly (1) as figure 6 shows, the counter first retention unit (2.1) is close to the counter second retention unit (2.2), that is, the removable attaching assembly (2) is in the second position.

According to said second position the second magnet (2.1.1) and the retractable magnets (2.2.1) are arranged in the same plane, in such a way that the second magnet (2.1.1) occupies a central and equidistant position regarding the retractable magnets (2.2.1) and the retractable magnets (2.2.1) are arranged at the ends of the guiding channels (2.2.2) reaching the projected position.

This arrangement in the second position it is due to a repulsion force produced between the second magnet (2.1.1) and the retractable magnets (2.2.1) as like poles are facing each other and they are close enough to the magnetic forces produced by them interact.

Thus, the repulsion force moves the retractable magnets (2.2.1) along the respective main axes "t₁", "t₂", "t₃" directions until they enter inside the groove (1.2.1.1) of the second retention unit (1.2). This provides mechanical retention according to a plane perpendicular to the assembly direction "m".

Said second position can be acquired by the force exerted in the assembly direction "m" by the fixed attaching assembly (1) on the removable attaching assembly (2) when it is pushed against the fixed attaching assembly (1) during the assembly process by contacting the contact surface (2.2.5) of the counter second retention unit (2.2) with the fixed attaching assembly (1).

Said pushing force allows overcoming the force of the elastic means (2.4) and change from the first position to the second position.

Additionally, as explained above the first magnet (1.1.1) and second magnet (2.1.1) are arranged in such a way that their opposite poles are facing together in the assembly direction "m". Thus, when they are close enough, that is, in the assembly position, the attraction force exerted between them provides the magnetic retention.

Therefore, in the assembly position both disclosed retentions, namely the magnetic retention provided by the first and the second magnets (1.1.1, 2.1.1) and the mechanical retention provided by the groove (1.2.1.1) and the retractable magnets (2.2.1), collaborate to produce the overall holding force of the attaching arrangement (10) of the invention.

The last component forming the removable attaching assembly (2) is the vehicle accessory (2.3).

It is connected for example to the counter first retention unit (2.1) through the third fixing means (2.6).

The removable vehicle accessory (2.3) as disclosed above, can be any accessory commonly used in the vehicle interior to improve occupant's comfort such as cup holders, phone holders, lamps, speakers, mobile support, mobile compartment, aroma diffuser, vehicle assistant system, healthy monitoring system, etc.

Particularly, some of them can need electrical power for their operation. Therefore, according to a second embodiment of the invention represented in figure 4, the attaching arrangement comprises a charging station as explained in detail hereunder.

The charging station is configured to provide electrical power to the vehicle accessory (2.3) when the attaching arrangement (1) is in the assembly position. Particularly, it provides electrical power from the general power supply of the vehicle to a battery (2.3.1) arranged in the removable attaching assembly (2). The battery (2.3.1) is preferably connected to a printed circuit board (5) which controls the charging process of the battery (2.3.1) and distributes the electrical power to the corresponding vehicle accessory (2.3).

The arrangement of the second embodiment basically keeps the same components and functions explained for the first embodiment with the incorporation of some components responsible to provide electrical power to the vehicle accessory (2.3). Thus, for the shake of brevity only the additional or slightly modified components regarding the first embodiment are described.

According to this second embodiment, the fixed attaching assembly (1) comprises electrical transmitting means (3.1, 3.2) and the removable attaching assembly (2) comprises electrical receiving means (3.3, 3.4).

Therefore, the electrical current is transmitted from the electrical transmitting means (3.1, 3.2) to the electrical receiving means (3.3, 3.4).

Particularly, the electrical transmitting means (3.1, 3.2) are connected to the general power supply of the vehicle through electrical wiring (6) and the electrical receiving means (3.3, 3.4) are connected to a battery (2.3.1) through the printed circuit board (2.3.2).

Particularly, as the example represented in figure 4, the electrical transmitting means (3.1, 3.2) comprise a first electrical contact pad (3.1) formed by first metal sheet and a second electrical contact pad (3.2) formed by a second metal sheet, each of them connected to the corresponding electrical wiring (6).

In this second embodiment, the first metal sheet extends according to a perpendicular plane to the assembly direction "m" and it is arranged between the first retention unit (1.1) and the second retention unit (1.2); and the second metal sheet extends along the groove (1.2.1.1) of the second retention unit (1.2).

The first electrical contact pad (3.1) is provided to contact with a third electrical contact pad (3.3) forming the corresponding electrical receiving means in the assembly position.

This third electrical contact pad (3.3) can be a third metal sheet attached to the contact surface (2.2.5) of the second counter retention unit (2.2). As figure 6 shows, the electrical current can be transmitted in turn through one of the second fixing means (2.5) by contacting said second fixing means (2.5) with the corresponding third metal sheet. In this case, one of the second fixing means (2.5) is electrically connected to the battery (2.3.1) through the printed circuit board (2.3.2) and acts as electrical conducting means (3.6).

The second electrical contact pad (3.2) formed by the second metal sheet extended along the groove (1.2.1.1) transmits the electrical power to a fourth electrical contact pad (3.4) which configures the corresponding receiving electrical means. Particularly, the fourth electrical contact pad (3.4) forms part of at least one of the retractable magnets (2.2.1). Therefore, when they (2.2.1, 3.2) are in contact in the assembly position, the electrical power is transmitted from the second metal sheet to the retractable magnet (2.2.1).

In turn, the fourth electrical contact pad (3.4) provided in the retractable magnet (2.2.1) is electrically connected to the battery (2.3.1) through the printed circuit board (2.3.2) for example by further elastic means (3.5) acting as electrical conducting means. Said further elastic means (3.5) can comprise a metal extension which can reach the contact pad (3.4) through an opening provided in the counter second retention unit (2.2).

Thus, in order to transmit the electrical power each of the first and second electrical contact pads (3.1, 3.2) are configured to be in contact in the assembly position with corresponding third and fourth electrical contact pads (3.3, 3.4) provided in the removable attaching assembly as explained above.

According to another variant of the invention not represented, the charging station transmits the electrical power to the battery (4) wirelessly.

Particularly in this variant the fixed attaching assembly (1) comprises a transmitting coil connected to the electrical wiring connected to general power supply of the vehicle; and the removable attaching assembly (2) comprises a receiving coil to receive the electrical power from the vehicle to be transmitted to the battery (4) to which said receiving coil is electrically connected.

According to the figures, the main shape of both, the fixed attaching assembly (1) and the removable attaching assembly (2) is circular, however the present invention considers other different shapes provided that the following conditions are fulfilled:
- the removable attaching assembly (2) can enter and be partially seated inside the fixed attaching assembly (1) during the assembly process and
- both above explained retentions, namely the magnetic retention and the mechanical retention can be produced.

Regarding the assembly process of the attaching arrangement of the invention, the removable attaching assembly (2) is configured to be assembled to the fixed attaching assembly (1) by facing and aligning both components in the assembly direction "m".

Then the removable attaching assembly (2) is moved towards the fixed attaching assembly (1) along said assembly direction "m" until the contact surface (2.2.5) reaches and is pushed against the fixed attaching assembly (1) .

Said pushing force overcomes the force of the elastic means (2.4) in such a way that the second position is reached in which the second magnet (2.1.1) and the retractable magnets (2.2.1) are arranged in the same plane.

A repulsion force is produced between the second magnet (2.1.1) and the retractable magnets (2.2.1) as like poles are facing each other.

Said repulsion force moves the retractable magnets (2.2.1) along the respective main axes "t₁", "t₂", "t₃" directions until they enter inside the groove (1.2.1.1) of the second retention unit (1.2) providing mechanical retention according to a plane perpendicular to the assembly direction "m", and the first magnet (1.1.1) and second magnet (2.1.1) are arranged close enough to exert an attraction force between them providing the magnetic retention.

Regarding the disassembly process of the attaching arrangement (10), the vehicle occupant pulls the removable attaching assembly (2) in the assembly direction "m" until the magnetic force between first magnet (1.1.1) and second magnet (2.1.1) is overcome and the force exerted by the elastic means (2.4) is restored.

This allows that the removable attaching assembly (2) adopts the first position where the counter first retention unit (2.1) is distant from the counter second retention unit (2.2) in such a way that the second magnet (2.1.1) and the retractable magnets (2.2.1) are arranged in different planes disappearing the repulsion force between them, which allows the retractable magnets (2.2.1) to move towards the inside of the guiding channels (2.2.2) reaching a retracted position.

## Claims

1. Attaching arrangement (10) for removable vehicle accessories (2.3) comprising a fixed attaching assembly (1) configured to be permanently connected to a vehicle trim (20) and a removable attaching assembly (2) configured to be removable connected to the fixed attaching assembly (1) according to an assembly direction m,
the attaching arrangement (10) configured to adopt a removed position in which the fixed attaching assembly (1) and the removable attaching assembly (2) are separated and an assembly position in which the fixed attaching assembly (1) and the removable attaching assembly (2) are joined together,
the fixed attaching assembly (1) comprising a housing (1.6) configured to receive the removable attaching assembly (2), said fixed attaching assembly (1) comprising:
• a first retention unit (1.1) configured to provide magnetic retention according to the assembly direction m and comprising:
∘ a first magnet (1.1.1) and
• a second retention unit (1.2) configured to provide mechanical retention according to a plane perpendicular to the assembly direction m and comprising an inner groove (1.2.1.1) which extends inwards the second retention unit (1.2) in the plane perpendicular to the assembly direction m creating thereby a channel in said second retention unit (1.2),
• first fixing means (1.3) configured to attach the fixed attaching assembly (1) to the vehicle trim (20),
said housing (1.6) formed by the first retention unit (1.1) and the second retention unit (1.2),
the removable attaching assembly (2) comprising:
• a counter first retention unit (2.1) configured to collaborate with the first retention unit (1.1) to provide magnetic retention according to the assembly direction m and comprising a second magnet (2.1.1),
• a counter second retention unit (2.2) configured to collaborate with the second retention unit (1.2) to provide mechanical retention according to the plane perpendicular to the assembly direction m and comprising:
∘ guiding channels (2.2.2) having main axes t₁, t₂, t₃, contained in a plane perpendicular to the assembly direction m,
∘ retractable magnets (2.2.1) housed in the guiding channels (2.2.2) and configured to move along them through the main axes t₁, t₂, t₃ directions in such a way that they can adopt a retracted position when they are totally inside the guiding channels (2.2.2) and a projected position when they project outward from the counter second retention unit (2.2) but remain retained within the corresponding guiding channel (2.2.2),
∘ a contact surface (2.2.5) configured to contact the fixed attaching assembly (1) in the assembly position,
• elastic means (2.4) between the counter first retention unit (2.1) and the counter second retention unit (2.2),
• second fixing means (2.5) between the counter first retention unit (2.1) and the counter second retention unit (2.2) which keeps said units (2.1, 2.2) permanently connected together but allow a movement between them along the assembly direction m,
• a vehicle accessory (2.3) connected to the counter first retention unit (2.1),
• third fixing means (2.6) configured to attach the vehicle accessory (2.3) to the counter first retention unit (2.1),
the counter first retention unit (2.1) and the counter second retention unit (2.2):
• being one inside the other in such a way that one of them can be displaced regarding the other in the assembly direction m,
• being configured to adopt a first position where the counter first retention unit (2.1) is distant from the counter second retention unit (2.2) and a second position where the counter first retention unit (2.1) is close to the counter second retention unit (2.2),
• being configured to keep the first position due to the elastic means (2.4),
the removable attaching assembly (2) configured to be assembled to the fixed attaching assembly (1) by facing and aligning both components in the assembly direction m and moving the removable attaching assembly (2) towards the fixed attaching assembly (1),
wherein according to the removed position:
the counter first retention unit (2.1) and the counter second retention unit (2.2) are in the first position in such a way that:
• the second magnet (2.1.1) is arranged in a first plane P₁ perpendicular to the assembly direction m and
• the retractable magnets (2.2.1) are arranged in a second plane P₂ perpendicular to the assembly direction m and different from the first plane P₁, and
• said retractable magnets (2.2.1) are freely movable along the main axes t₁, t₂, t₃ directions of the guiding channels (2.2.2) which allows they move towards the inside of the guiding channels (2.2.2) to reach the retracted position,
wherein according to the assembly position:
the counter first retention unit (2.1) and the counter second retention unit (2.2) are in the second position in such a way that,
• the second magnet (2.1.1) and the retractable magnets (2.2.1) are arranged in the same plane, the second magnet (2.1.1) occupying a central and equidistant position regarding the retractable magnets (2.2.1),
• the retractable magnets (2.2.1) are arranged in the projected position due to a repulsion force produced between the second magnet (2.1.1) and the retractable magnets (2.2.1),
• the retractable magnets (2.2.1) being housed in the groove (1.2.1.1) forming the second retention unit (1.2) providing mechanical retention according to the plane perpendicular to the assembly direction m,
• the contact surface (2.2.5) being in contact with the fixed attaching assembly (1),
• the first magnet (1.1.1) and the second magnet (2.1.1) are close together due to the attraction force exerted between them providing magnetic retention according to the assembly direction m.

2. Attaching arrangement (10) for removable vehicle accessories (2.3) according to claim 1 wherein it further comprises a charging station configured to provide electrical power to the vehicle accessory (2.3) when the attaching arrangement (10) is in the assembly position, wherein the fixed attaching assembly (1) comprises electrical transmitting means (3.1, 3.2) and the removable attaching assembly (2) comprises electrical receiving means (3.3, 3.4) for transmitting electrical current.

3. Attaching arrangement (10) for removable vehicle accessories (2.3) according to claim 2 wherein the electrical current powers a battery (2.3.1) provided in the removable attaching assembly (2).

4. Attaching arrangement (10) for removable vehicle accessories (2.3) according to claim 2 wherein the transmitting means comprise a first electrical contact pad (3.1) and a second electrical contact pad (2.2) and the receiving means comprise a third electrical contact pad (3.3) and a fourth electrical contact pad (3.4), being in the assembly position said first electrical contact pad (3.1) and said third electrical contact pad (3.3) in contact, and said the second electrical contact pad (3.2) and said fourth electrical contact pad (3.4) in contact to transmit the electrical power.

5. Attaching arrangement for removable vehicle accessories according to claim 2 wherein the transmitting means comprise a transmitting coil and the electrical receiving means comprise a receiving coil to transmit electrical power wirelessly.

6. Attaching arrangement for removable vehicle accessories according to claim 1 wherein according to the assembly position the counter first retention unit (2.1) keeps a fixed position regarding the counter second retention unit (2.2) and the counter second retention unit (2.2) is configured to move towards the counter first retention unit (2.1) by overcoming the force exerted by the elastic means (2.4).

7. Attaching arrangement for removable vehicle accessories according to claim 1 wherein the counter second retention unit (2.2) is divided into two parts, a main part (2.2.3) and a linking part (2.2.4) that fit together, wherein the collaboration between both parts configures the guiding channels (2.2.2) which allows the movement of the retractable magnets (2.2.1) along the respective main axes t₁, t₂, t₃ directions, and prevents the movement thereof along the assembly direction m.

8. Vehicle trim (20) comprising an attaching arrangement (10) for removable vehicle accessories (2.3) according to any previous claims installed in an opening (20.1).
